# EUROPÄISCHE PATENTSCHRIFT

(11) **EP 3 512 967 B1**
(45) Veröffentlichungstag und Bekanntmachung des Hinweises auf die Patenterteilung: **19.06.2024**
(21) Anmeldenummer: 17755153.8
(22) Anmeldetag: 16.08.2017
(51) Int. Cl.: C21D 6/00, C21D 8/10, C21D 9/08, C22C 38/00, C22C 38/38, C22C 38/32, C22C 38/30, C22C 38/28, C22C 38/26, C22C 38/24, C21D 8/02, C22C 38/02, C22C 38/04, C22C 38/06, C22C 38/20, C22C 38/22

(54) **VERFAHREN ZUR HERSTELLUNG EINES UMGEFORMTEN BAUTEILS AUS EINEM MANGANHALTIGEN STAHLFLACHPRODUKT UND EIN DERARTIGES BAUTEIL**
METHOD FOR PRODUCING A RE-SHAPED COMPONENT FROM A MANGANESE-CONTAINING FLAT STEEL PRODUCT AND SUCH A COMPONENT
PROCÉDÉ POUR LA FABRICATION D'UNE PIÈCE FAÇONNÉE EN UN PRODUIT PLAT EN ACIER CONTENANT DU MANGANÈSE ET PIÈCE CORRESPONDANTE

(30) Priorität: 16.09.2016 DE 102016117507
(43) Veröffentlichungstag der Anmeldung: 24.07.2019
(73) Patentinhaber: Salzgitter Flachstahl GmbH, 38239 Salzgitter (DE)
(72) Erfinder: PALZER, Peter, 38704 Liebenburg (DE); EVERTZ, Thomas, 31228 Peine (DE); OTTO, Manuel, 38162 Cremlingen (DE); KÖHLER, Kai, 31171 Nordstemmen (DE)
(74) Vertreter: Moser Götze & Partner Patentanwälte mbB
(86) Internationale Anmeldenummer: PCT/EP2017/070777
(87) Internationale Veröffentlichungsnummer: WO 2018/050387

(56) Entgegenhaltungen:
- WO-A1-2016/131218
- KR-A- 20050 042 513
- KR-A- 20160 003 744
- US-A- 3 752 709

## Beschreibung

Die Erfindung betrifft ein Verfahren zur Herstellung eines Bauteils aus einem mittelmanganhaltigen Stahlflachprodukt mit 4 bis kleiner 10 Gew.-% Mn, mit 0,0005 bis 0,9 Gew.-% C, mit 0,02 bis 10 Gew.-% AI, Rest Eisen einschließlich unvermeidbarer stahlbegleitender Elemente und mit TRIP-Effekt bei Raumtemperatur. Auch betrifft die Erfindung eine Verwendung für die nach diesem Verfahren hergestellten Bauteile.

Aus der europäischen Patentanmeldung EP 2 383 353 A2 ist ein Stahlflachprodukt aus einem manganhaltigen Stahl bekannt, der aus den folgenden Elementen (Gehalte in Gewichtsprozent und bezogen auf die Stahlschmelze) besteht: C: bis 0,5; Mn: 4 bis 12,0; Si: bis zu 1,0; AI: bis zu 3,0; Cr: 0,1 bis 4,0; Cu: bis zu 4,0; Ni: bis zu 2,0; N: bis zu 0,05; P: bis zu 0,05; S: bis zu 0,01 sowie Rest Eisen und unvermeidbare Verunreinigungen. Optional sind ein oder mehrere Elemente aus der Gruppe "V, Nb, Ti" vorgesehen, wobei die Summe der Gehalte dieser Elemente höchstens gleich 0,5 ist. Dieser Stahl soll sich dadurch auszeichnen, dass dieser kostengünstiger herzustellen ist als hochmanganhaltige Stähle und gleichzeitig hohe Bruchdehnungswerte und damit einhergehend eine deutlich verbesserte Umformbarkeit besitzt. Nach einem Abschrecken des Stahlflachprodukts in Öl oder Wasser auf Raumtemperatur weist dieses eine Zugfestigkeit von 900 bis 1500 MPa bei einer Bruchdehnung A80 von mindestens 4% auf.

In der deutschen Offenlegungsschrift DE 10 2012 111 959 A1 wird ein Verfahren zur Herstellung eines Kraftfahrzeugbauteils beschrieben. Dazu wird bevorzugt ein Stahl mit TWIP-Eigenschaften bei Raumtemperatur, mit einem hohen Mangangehalt von 10 bis 30 Gewichtsprozent, mit einem Aluminiumgehalt von maximal 8 Gewichtsprozent und einem Kohlenstoffgehalt von maximal 2 Gewichtsprozent verwendet. In dem Verfahren wird eine Stahlblechplatine zumindest partiell auf eine Kaltumformtemperatur von +30 °C bis - 250 °C temperiert. Anschließend wird die Stahlblechplatine zu dem Kraftfahrzeugbauteil bei der Kaltumformtemperatur umgeformt, wodurch zumindest partiell eine Martensitbildung induziert wird.

Auch sind in der deutschen Offenlegungsschrift DE 10 2012 013 113 A1 bereits sogenannte TRIP-Stähle beschrieben, die ein überwiegend ferritisches Grundgefüge mit eingelagertem Restaustenit aufweisen, der während einer Umformung zu Martensit umwandeln kann (TRIP-Effekt). Wegen seiner starken Kaltverfestigung erreicht der TRIP-Stahl hohe Werte der Gleichmaßdehnung und Zugfestigkeit. TRIP-Stähle eignen sich für den Einsatz u. a. in Struktur-, Fahrwerks- und crashrelevanten Bauteilen von Fahrzeugen, als Blechplatinen, sowie als geschweißte Platinen.

Des Weiteren ist in der deutschen Patentschrift DE 10 2013 104 298 B4 als Umformverfahren für mittel- oder hochmanganhaltige Stahlbänder ein Walzprofilieren beschrieben, das auch als Rollformen bezeichnet wird. Das Rollformen beziehungsweise Walzprofilieren ist ein kontinuierliches Biegeverfahren, bei dem die Stahlbänder von einer Vielzahl Walzenpaaren schrittweise bis zu Walzprofilprodukten in einer gewünschten Endform umgeformt werden. Häufig erfolgte eine Kombination des Rollformens mit anderen Fertigungsverfahren wie beispielsweise Stanzen, Längsschweißen oder Prägen, um nahezu beliebige Profilformen auch mit über Bauteillänge veränderlichen Querschnitten herzustellen. Um durch das Walzprofilieren eine erhebliche Festigkeitssteigerung zu erreichen, soll das Stahlband vor und/oder während des Walzprofilierens zumindest bereichsweise auf eine Temperatur von maximal -20°C oder weniger, beispielsweise auf eine Temperatur von -40°C bis -180°C, abgekühlt werden.

Ein weiteres bekanntes Umformverfahren, das sogenannte Innenhochdruckumformen, ist beispielsweise an Hand einer Innenhochdruckumformung von Rohren in der Offenlegungsschrift DE 10 2008 014 213 A1 beschrieben. Hierbei werden rohrförmige Werkstücke in mindestens zweiteilige Werkzeuge eingelegt und mit einem Wirkmedium, das unter hohem Druck steht, innenseitig beaufschlagt. Hierdurch wird das Werkstück aufgeweitet, in eine Gravur beziehungsweise Geometrie des Werkzeugs geformt, teilweise nachgeschoben und erhält somit die Form des Werkzeugs. Der Werkstoff muss dabei so ausgelegt sein, dass auch lokal eine hohe Umformung ohne Werkstoffversagen aufgenommen werden kann.

Außerdem ist aus der internationalen Offenlegungsschrift WO 2016/131218 A1 bereits ein heißgepresstes Bauteil aus einem Stahlblech mit TRIP-Effekt und mit folgender chemischer Zusammensetzung in Gew.-% bekannt: C: 0,18 bis 0,42; Mn: 5,09 bis 8,5; Al + Si: 0,8 bis 3,0, Rest Eisen einschließlich unvermeidbarer stahlbegleitender Elemente. Vor dem Heißpressen wird das Stahlblech auf eine Temperatur zwischen 700 bis 850°C aufgeheizt und nach dem Heißpressen auf eine Temperatur im Bereich von 150 bis 260°C unter der Martensitumwandlungsstarttemperatur abgekühlt. Die Martensitumwandlungsstarttemperatur wird so eingestellt, dass diese nicht höher als 280°C ist. Entsprechend soll die Abkühlendtemperatur kleiner als 100°C sein. In Ausführungsbespielen werden Temperaturen von 0, 15, 30, 40, 60 80 und 100 °C angegeben.

Die koreanische Offenlegungsschrift KR 2016 0003744 A offenbart ein weiteres Verfahren zur Herstellung von Bauteilen aus einem Leichtbaustahl mit TRIP-/TWIP-Eigenschaften durch Umformung eines Vorproduktes in einer oder mehreren Stufen. Zur Erzielung einer besonders hohen Zähigkeit des Bauteils wird die Umformung bei einer den TRIP-/TWIP-Effekt vermeidenden Temperatur oberhalb Raumtemperatur bei 40 bis 160°C durchgeführt. Eine besonders hohe Festigkeit des Bauteils wird dagegen durch die Umformung bei einer den TRIP-/TWIP-Effekt verstärkenden Temperatur unterhalb der Raumtemperatur bei -65 bis 0°C, erreicht.

Hiervon ausgehend liegt der vorliegenden Erfindung die Aufgabe zu Grunde, ein Verfahren zur Herstellung eines Bauteils aus einem mittelmanganhaltigen Stahlflachprodukt, ein nach diesem Verfahren hergestelltes Bauteil und eine Verwendung hierfür zu schaffen, das sich durch sehr hohe Festigkeiten mit einem erhöhten Restdehnungs- und Umformvermögen auszeichnet.

Diese Aufgabe wird durch ein Verfahren zur Herstellung eines Bauteils aus einem mittelmanganhaltigen Stahlflachprodukt mit den Merkmalen des Anspruchs 1und eine Verwendung für das nach diesem Verfahren hergestellte Bauteil gemäß Anspruch 11 gelöst. Vorteilhafte Ausgestaltungen der Erfindung sind in den Unteransprüchen angegeben.

Erfindungsgemäß wird durch ein Verfahren zur Herstellung eines Bauteils aus einem mittelmanganhaltigen Stahlflachprodukt mit 4 bis kleiner 10 Gew.-% Mn, vorzugsweise mit größer 5 bis kleiner 10 Gew.-% Mn, mit 0,0005 bis 0,9 Gew.-% C, vorzugsweise 0,05 bis 0,35 Gew.-% C, mit 0,02 bis 10 Gew.-% AI, bevorzugt 0,05 bis 5 Gew.-% AI, insbesondere bevorzugt größer 0,5 bis 3 Gew.-% AI, Rest Eisen einschließlich unvermeidbarer stahlbegleitender Elemente mit optionaler Zulegierung von: Si: 0 bis 6, bevorzugt 0,05 bis 3, insbesondere bevorzugt 0,1 bis 1,5; Cr: 0 bis 6, bevorzugt 0,1 bis 4, insbesondere bevorzugt größer 0,5 bis 2,5; Nb: 0 bis 1, bevorzugt 0,005 bis 0,4, insbesondere bevorzugt 0,01 bis 0,1; V: 0 bis 1,5, bevorzugt 0,005 bis 0,6, insbesondere bevorzugt 0,01 bis 0,3; Ti: 0 bis 1,5, bevorzugt 0,005 bis 0,6, insbesondere bevorzugt 0,01 bis 0,3; Mo: 0 bis 3, bevorzugt 0,005 bis 1,5, insbesondere bevorzugt 0,01 bis 0,6; Sn: 0 bis 0,5, bevorzugt kleiner 0,2, insbesondere bevorzugt kleiner 0,05; Cu: 0 bis 3, bevorzugt kleiner 0,5, insbesondere bevorzugt kleiner 0,1; W: 0 bis 5, bevorzugt 0,01 bis 3, insbesondere bevorzugt 0,2 bis 1,5; Co: 0 bis 8, bevorzugt 0,01 bis 5, insbesondere bevorzugt 0,3 bis 2; Zr: 0 bis 0,5, bevorzugt 0,005 bis 0,3, insbesondere bevorzugt 0,01 bis 0,2; Ta: 0 bis 0,5, bevorzugt 0,005 bis 0,3, insbesondere bevorzugt 0,01 bis 0,1; Te: 0 bis 0,5, bevorzugt 0,005 bis 0,3, insbesondere bevorzugt 0,01 bis 0,1; B: 0 bis 0,15, bevorzugt 0,001 bis 0,08, insbesondere bevorzugt 0,002 bis 0,01; P: kleiner 0,1, bevorzugt kleiner 0,04; S: kleiner 0,1, bevorzugt kleiner 0,02; N: kleiner 0,1, bevorzugt kleiner 0,05 und mit TRIP- -Effekt bei Raumtemperatur, wobei das Stahlflachprodukt mit einem Gefüge hergestellt wird, das einen Austenitanteil von 10 bis 80 %, 20 bis 90 % Martensit, Ferrit und Bainit aufweist, wobei mindestens 30 % des Martensits als angelassener Martensit vorliegt, umfassend die Schritte:
- Vorwärmen des Stahlflachprodukts vor dem ersten Umformschritt auf eine Temperatur von 60 °C bis 450 60 °C
- Umformen des Stahlflachprodukts zu einem Bauteil mit mindestens einem Umformschritt bei dieser Temperatur von 60 60 °C bis 450 °C,
- Abkühlen des Bauteils nach dem mindestens einen Umformschritt auf eine Temperatur von kleiner als Raumtemperatur bis -196 60 °C oder Umformen des Bauteils nach dem mindestens einen Umformschritt mit mindestens einem weiteren Umformschritt bei einer Temperatur von kleiner als Raumtemperatur bis -196 °C, wobei das Bauteil eine Dehngrenze Rp0,2 von 300 bis 1350 MPa, eine Zugfestigkeit Rm von 1100 bis 2200 MPa und eine Bruchdehnung A80 von mehr als 4 bis 41% aufweist.

Durch eine Absenkung der Temperatur vor, während oder nach einer vorzugsweise abschließenden Umformung wird der TRIP-Effekt energetisch bevorzugt und der Austenit im Mittelmanganstahl wandelt zu einem höheren Anteil in Martensit um. Mit dieser Umformung in dem erfindungsgemäßen tiefen Temperaturbereich geht einher, dass gleichzeitig das Umformvermögens und die Festigkeit durch den TRIP-Effekt erhöht werden. Auch findet generell eine hohe Verfestigung des Bauteils statt. Die Zunahme der Festigkeit erfolgt bei alleiniger Abkühlung ohne Umformung durch eine temperaturinduzierte Umwandlung von metastabilen Austenit in Martensit. Der Austenitanteil nach erfolgter Unterkühlung und optionaler Umformung ist um mindestens 10 % bezogen auf den Ausgangsaustenitgehalt geringer als der Austenitgehalt bei Raumtemperatur oder einer vergleichbaren Umformung bei Raumtemperatur. Auch über eine Abkühlung nach dem Umformen wird eine athermische Martensitbildung zur Erhöhung der Festigkeit bei gleichzeitiger Abnahme der Dehnung/Zähigkeit erreicht.

Insgesamt wird durch die Umformung bei den erfindungsgemäß tiefen Temperaturen erreicht, dass der TRIP-Effekt gezielt genutzt wird, um bei niedrigen Temperaturen unterhalb RT eine hohe Verfestigung zu bewirken und einen höheren Martensitanteil im Gefüge zu erhalten.

Vorteilhafterweise ist vorgesehen, dass das Bauteil mit dem mindestens einen weiteren Umformschritt bei einer Temperatur kleiner als 0 bis -196 60 °C umgeformt wird. Hierfür wird das Stahlflachprodukt vor mindestens einem weiteren Umformschritt auf eine Temperatur von kleiner als Raumtemperatur bis -196 °C, bevorzugt kleiner als 0 60 °C bis -196 °C, abgekühlt. Demnach ist ein Abkühlen des Stahlflachprodukts vor und/oder während des Umformens bevorzugt. Besonders bevorzugt wird durch die eintretende Festigkeitserhöhung die Verformung bei den erfindungsgemäßen tiefen Temperaturen nur bei einem oder mehreren abschließenden Umformschritten vorgenommen, da durch die Festigkeitserhöhung das Umformvermögen verringert wird.

Mit der Erhöhung der Temperatur vor der ersten Umformung geht auch eine Verringerung der erforderlichen Umformkräfte einher. Auch wird eine Erhöhung des Restumformvermögens der umgeformten Bauteile mit Zugfestigkeiten größer als 800 MPa bis 2000 MPa bei Bruchdehnungen von größer 3 % in den am stärksten umgeformten Bereichen bewirkt. Das Vorwärmen des Stahlflachprodukts kann für das Coil oder das abgewickelte Band- oder Tafelmaterial erfolgen. Durch das Umformen mit dem erfindungsgemäßen Vorwärmen des Stahlflachprodukts vor dem ersten Umformschritt wird während des Umformvorgangs eine Umwandlung von metastabilen Austenit in Martensit (TRIP-Effekt) ganz oder gezielt teilweise unterdrückt, wobei sich im Austenit Verformungszwillinge (TWIP-Effekt) bilden können. Hierdurch wird die erfindungsgemäße und vorteilhafte Reduktion der Umformkräfte erreicht und das Gesamtumformvermögen erhöht.

In einer weiteren Verfahrensvariante ist vorgesehen, dass das Stahlflachprodukt mit weiteren Umformschritten bei einer Temperatur des Stahlflachprodukts von Raumtemperatur bis unterhalb Ac3, vorzugsweise von Raumtemperatur bis 450 °C, zu einem Bauteil umgeformt wird. Hierdurch können gezielt Verformungszwillinge eingebracht werden, welche bei Raumtemperatur weiter in Martensit umwandeln und einen höheren Umformgrad zulassen, wodurch das Energieaufnahmevermögen von Bauteilen erhöht wird.

Im Zusammenhang mit der vorliegenden Erfindung wird Raumtemperatur als im Bereich zwischen 15 bis 25 60 °C liegend definiert.

Besonders vorteilhaft ist vorgesehen, dass das Stahlflachprodukt mit den weiteren einzelnen Umformschritten bei unterschiedlichen Temperaturen, die jeweils auch lokal begrenzt sein können, zu einem Bauteil umgeformt wird. Hierdurch kann optional eine gezielte und lokale Einstellung von Festigkeits- und Dehnungseigenschaften des Bauteils durch die Variation der Umformtemperatur erreicht werden. Somit erfolgt lokal eine gezielte Einstellung von Eigenschaften durch Kühlen oder Erwärmen. Durch gezieltes Abkühlen werden vor allem höhere Festigkeiten und durch lokales Erwärmen höhere Restdehnungen beziehungsweise ein höheres Umformvermögen erreicht.

Dadurch, dass die Kühlung nur partiell vorgenommen wird, wird in bestimmten Bereichen des Bauteils eine Steigerung der Festigkeitskennwerte gekennzeichnet durch die Streck-/Dehngrenze und/oder Zugfestigkeit erzielt. Dies entspricht einem sogenannten tailored cooling.

In einer Variante ist vorgesehen, dass das Stahlflachprodukt von einer Seite abgekühlt und/oder vorgewärmt wird. Hierdurch kann eine harte Schicht auf einem duktilen Bauteil erzeugt werden. Alternativ kann vorgesehen werden, dass das Stahlflachprodukt von beiden Seiten vorgewärmt und/oder abgekühlt wird. Bevorzugt ist vorgesehen, dass das Stahlflachprodukt so von beiden Seiten abgekühlt wird, dass über den Querschnitt des Stahlflachprodukts ein Temperaturgradient vorliegt.

Um das erfindungsgemäße Temperaturfenster für die Umformung einzuhalten, kann das Stahlflachprodukt beim Umformen zwischen den Umformschritten auf Temperaturen zwischen -196 60 °C bis unterhalb Ac3 - je nach der gewünschten Verfahrensweise - zwischenerwärmt oder zwischengekühlt werden.

Besonders vorteilhaft eignet sich das Verfahren, um das Stahlflachprodukt mittels Rollumformen umzuformen.

Im Zuge des Rollumformens erfährt das Stahlflachprodukt mindestens eine Abkantung, eine Stauchung, eine bereichsweise Dickenreduktion, eine Prägung, eine Stanzung oder ein Einnuten oder Kombinationen hiervon in einer Vielzahl von aufeinander abfolgenden Verformungs- oder Bearbeitungsschritten. Auch können Bauteile in Form von geschlossenen Profilen erzeugt werden, welche optional nach dem Rollumformen hierzu geschweißt, vorzugsweise längsnahtgeschweißt, werden.

Auch eignet sich das Verfahren, um aus dem Stahlflachprodukt hergestellte Rohre mittels Innenhochdruckumformen umzuformen, das vorzugsweise mittels festen, flüssigen oder gasförmigen Wirkmedien erfolgt. In bekannter Weise wird dazu das Stahlflachprodukt, insbesondere ein gewalztes Warm- oder Kaltband, zu einem Spaltrohr eingeformt und dann zu einem Rohr längsnahtgeschweißt oder alternative spiralförmig eingeformt und zu einem Rohr spiralnahtgeschweißt. Anschließend erfolgt bevorzugt - aber optional - ein Glühen des Rohres (500 bis 850 °C, 30 Sekunden bis 12 h) unmittelbar nach dem Längsnahtschweißen oder Spiralnahtschweißen, beispielsweise induktiv oder im Durchlaufofen oder in stationären Ofeneinheiten, wie beispielsweise im Herdofen oder Muffelofen. Alternativ kann bei einem geringen Umformgrad und ausreichender verbleibender Restduktilität für die anschließende Innenhochdruckumformung auf die Glühung verzichtet werden und somit eine Weiterverarbeitung im verfestigten Zustand erfolgen. Anschließend erfolgt das erfindungsgemäße Innenhochdruckumformen bei einer bevorzugten Temperatur von 60 bis 450 °C. Die Erwärmung erfolgt vorzugsweise über das Wirkmedium. Das Umformen kann in mehreren Schritten erfolgen. Das Bauteil weist nach dem Halbwarm-Innenhochdruckumformen vorzugsweise noch mindestens 50 % des Ausgangsaustenitanteils auf. Ein vorteilhafter Temperaturbereich für das Innenhochdruckumformen liegt zwischen 60 und 450 °C.

In Bezug auf das über Rollumformen oder Innenhochdruckumformen erhaltene Bauteil ergeben sich folgende Abhängigkeiten von Zugfestigkeit Rm in MPa und Bruchdehnung A80 in %:

| | |
|---|---|
| Rm von 700 bis 800 MPa: | Rm x A80 ≥ 15400 bis zu 50000 MPa% |
| Rm von über 800 bis 900 MPa: | Rm x A80 ≥ 14400 bis zu 50000 MPa% |
| Rm von über 900 bis 1100 M Pa: | Rm x A80 ≥ 13500 bis zu 45000 MPa% |
| Rm von über 1100 bis 1200 MPa: | Rm x A80 ≥ 13200 bis zu 45000 MPa% |
| Rm von über 1200 bis 1350 MPa: | Rm x A80 ≥ 11200 bis zu 45000 MPa% |
| Rm von über 1350 bis 1800 MPa: | Rm x A80 ≥ 8000 bis zu 45000 MPa% |
| Rm von über 1800 MPa: | Rm x A80 ≥ 7200 bis zu 30000 MPa% |

Dieses Stahlflachprodukt aus dem mittel-manganhaltigen TRIP(TRansformation Induced Plasticity)- und/oder TWIP (TWinning Induced Plasticity)-Stahl weist eine hervorragender Kalt- und Halbwarmumformbarkeit, erhöhten Widerstand gegen wasserstoffinduzierte verzögerte Rissbildung (delayed fracture), gegen Wasserstoffversprödung (hydrogen embrittlement) nach der Umformung sowie gegen Flüssigmetallversprödung (LME) beim Schweißen auf.

In üblicher Weise wird das vorbeschriebene Stahlflachprodukt mit einer nachfolgend angeführten Erzeugungsroute hergestellt:
- Erschmelzen und Legieren einer Stahlschmelze mit der vorstehend beschriebenen chemischen Zusammensetzung in einem über die Prozessroute Hochofen-Stahlwerk oder Elektrolichtbogenofen-Stahlwerk mit optionaler Vakuumbehandlung der Schmelze;
- Vergießen der Stahlschmelze zu einem Vorband mittels eines endabmessungsnahen horizontalen oder vertikalen Bandgießverfahrens oder Vergießen der Stahlschmelze zu einer Bramme oder Dünnbramme mittels eines horizontalen oder vertikalen Brammen- oder Dünnbrammengießverfahrens,
- Erwärmen des Vorbandes auf eine Walztemperatur von 1050 bis 1250°C oder Inlinewalzen aus der Gießhitze (erste Hitze) heraus,
- Warmwalzen des Vorbandes oder der Bramme oder der Dünnbramme zu einem Warmband mit einer Dicke von 20 bis 0,8 mm mit einer Walzendtemperatur von 1050 bis 800°C,
- Aufhaspeln des Warmbandes bei einer Temperatur von mehr als 100 bis 800°C,
- Beizen des Warmbandes,
- Glühen des Warmbandes in einer Durchlauf- oder Haubenglühanlage beziehungsweise in einer kontinuierlichen oder diskontinuierlichen Glühanlage bei einer Glühzeit von 1 min. bis 24 h und Temperaturen von 500 bis 840°C,
- optionales Kaltwalzen des Warmbandes bei Raumtemperatur, bevorzugt mit einem Vorwärmen auf 60 bis unterhalb Ac3-Temperatur, bevorzugt 60 bis 450°C vor dem ersten Walzstich zur Verringerung der Walzkräfte und Bildung von Verformungszwillingen im Austenit und bedarfsweisem Kühlen oder Erwärmen zwischen den Walzstichen auf 60 60 °C bis unterhalb der Ac3-Temperatur, bevorzugt 60 bis 450 °C,
- optionales Glühen bei 500 bis 840 60 °C für 1 min bis 24 h in einer Durchlauf- oder Haubenglühanlage beziehungsweise in einer kontinuierlichen oder diskontinuierlichen Glühanlage.
- optionales elektrolytisches Verzinken oder Feuerverzinken des Stahlbandes oder Aufbringen einer anderweitigen organischen oder anorganischen Beschichtung,

Anschließend findet die erfindungsgemäße Umformung des Stahlflachproduktes zu einem Bauteil statt.

Das nach dieser Erzeugungsroute hergestellte Stahlflachprodukt weist ein Gefüge mit einem Austenitanteil von 10 bis 80 % auf, 20 bis 90 % Martensit, Ferrit und Bainit, wobei mindestens 30 % des Martensits als angelassener Martensit vorliegen. Bevorzugt weist das Gefüge 40 bis 80 % Austenit, weniger als 20 % Ferrit/Bainit und Rest Martensit auf.

Übliche Dickenbereiche für Vorband sind 1 mm bis 35 mm sowie für Brammen und Dünnbrammen 35 mm bis 450 mm. Vorzugsweise ist vorgesehen, dass die Bramme oder Dünnbramme zu einem Warmband mit einer Dicke von 20 mm bis 0,8 mm warmgewalzt wird oder das endabmessungsnah gegossene Vorband zu einem Warmband mit einer Dicke von 8 mm bis 0,8 mm warmgewalzt wird. Das Kaltband hat eine Dicke von üblicherweise unter 3 mm, vorzugsweise 0,1 bis 1,4 mm.

Im Zusammenhang mit dem vorstehenden erfindungsgemäßen Verfahren wird ein endabmessungsnah mit dem Zwei-Rollen Gießverfahren erzeugtes Vorband mit einer Dicke von kleiner gleich 3 mm, vorzugsweise 1 mm bis 3 mm, bereits als Warmband verstanden. Das so als Warmband produzierte Vorband weist, bedingt durch die eingebrachte Umformung der beiden gegenläufigen Walzen, keine Gussstruktur auf. Ein Warmwalzen findet somit bereits inline während des Zwei-Rollen-Gießverfahrens statt, so dass ein separates Erwärmen und Warmwalzen optional entfallen kann. Das Kaltwalzen des Warmbandes kann bei Raumtemperatur oder vorteilhaft bei erhöhter Temperatur mit einer Erwärmung vor dem ersten Walzstich und /oder Erwärmungen in einem weiteren oder zwischen mehreren Walzstichen stattfinden. Das Kaltwalzen bei erhöhter Temperatur ist vorteilhaft, um die Walzkräfte zu reduzieren und die Bildung von Verformungszwillingen (TWIP-Effekt) zu begünstigen. Vorteilhafte Temperaturen des Walzgutes vor dem ersten Walzstich betragen 60 bis 450°C.

Erfolgt das Kaltwalzen in mehreren Walzstichen ist es vorteilhaft, das Stahlband zwischen den Walzstichen auf eine Temperatur von 60°C bis unterhalb Ac3-Temperatur, bevorzugt 60 bis 450°C, zwischen zu erwärmen bzw. zu kühlen, da der TWIP-Effekt in diesem Bereich besonders vorteilhaft zum Tragen kommt. Je nach Walzgeschwindigkeit und Umformgrad kann sowohl ein Zwischenerwärmen, bspw. bei sehr niedrigen Umformgraden und Walzgeschwindigkeiten, als auch eine zusätzliche Kühlung, bedingt durch die Erwärmung des Werkstoffs beim schnellen Walzen und hohen Umformgraden, vorgenommen werden.

Nach einem Kaltwalzen des Warmbandes bei Raumtemperatur ist das Stahlband zur Wiederherstellung ausreichender Umformeigenschaften in einer Durchlauf- oder Haubenglühanlage beziehungsweise in einer kontinuierlichen oder diskontinuierlichen Glühanlage vorteilhaft bei einer Glühzeit von 1 min. bis 24 h, vorzugsweise kleiner 10 min. und Temperaturen von 500 bis 840°C zu Glühen. Falls zur Erzielung bestimmter Werkstoffeigenschaften erforderlich, kann dieser Glühvorgang auch bei dem bei erhöhter Temperatur gewalzten Stahlband erfolgen.

Nach der Glühbehandlung wird das Stahlband vorteilhaft auf eine Temperatur von 250°C bis Raumtemperatur abgekühlt und anschließend, falls erforderlich, zur Einstellung der geforderten mechanischen Eigenschaften, im Zuge einer Alterungsbehandlung, auf eine Temperatur von 300 bis 450°C wieder erwärmt, bei dieser Temperatur für bis zu 5 min. gehalten und anschließend auf Raumtemperatur abgekühlt. Die Alterungsbehandlung kann vorteilhaft in einer Durchlaufglühanlage durchgeführt werden.

Das so hergestellte Stahlflachprodukt kann optional elektrolytisch verzinkt oder feuerverzinkt werden. In einer vorteilhaften Weiterbildung erhält das so hergestellte Stahlband anstelle oder nach dem elektrolytischen Verzinken oder Feuerverzinken eine Beschichtung auf organischer oder anorganischer Basis. Dies können zum Beispiel organische Beschichtungen, Kunststoffbeschichtungen oder Lacke oder anderweitige anorganische Beschichtungen wie beispielsweise Eisenoxidschichten sein.

Es kann nach dem vorbeschriebenen Verfahren ein umgeformtes Bauteil hergestellt werden. Das vorzugsweise bei erhöhter Temperatur umgeformte Bauteil weist bei gleichem Umformgrad mindestens die gleichen oder höheren Festigkeitseigenschaften (Streck-/Dehngrenze und/oder Zugfestigkeit) im Vergleich zu einem bei Raumtemperatur umgeformten Bauteil auf, wobei die Bruchdehnung im Vergleich zum Umformen bei Raumtemperatur um mindestens 10 % höher liegt. Analog ist es möglich, vergleichbare Kennwerte für die Bruchdehnung einzustellen, wobei der Kennwert für die Festigkeit (Streck-/Dehngrenze, und/oder Zugfestigkeit) im Vergleich um 10 % oberhalb der Kennwerte vom Umformen bei Raumtemperatur liegt. Das halbwarm umgeformte Bauteil weist einen erhöhten Widerstand gegenüber wasserstoffinduzierter Versprödung und verzögerter Rissbildung auf, da der TRIP-Effekt zumindest teilweise unterdrückt wird. Auch findet keine Flüssigmetallversprödung beim Schweißen statt.

Mit der Erfindung ist die Herstellung eines hochfesten Bauteils möglich, welches eine im Vergleich zu niedrig legierten Stählen gleicher Festigkeitsklasse deutlich verbesserte Restdehnung und/oder Restzähigkeit aufweist und im Vergleich zu für derartige Anwendungen derzeit genutzten Hochmangan-Stählen mit Legierungsgehalten >= 10 Gew.-% Mn und/oder hoch-Cr-legierten und/oder Cr-Ni oder sonstigen hochlegierten Stählen deutlich kostengünstiger ist.

Erfindungsgemäß bietet sich vorteilhaft eine Verwendung eines nach dem vorbeschriebenen Verfahren hergestellten Bauteils im Kraftfahrzeugbau, Schienenfahrzeugbau, Schiffsbau, Anlagenbau, Infrastrukturbau, in der Luft- und Raumfahrt, Hausgerätetechnik und in geschweißten Platinen (tailored welded blanks) an.

Ein nach dem erfindungsgemäßen Verfahren hergestelltes Stahlband weist eine Dehngrenze Rp0,2 von 300 bis 1350 MPa, eine Zugfestigkeit Rm von 1100 bis 2200 MPa und eine Bruchdehnung A80 von mehr als 4 bis 41% auf, wobei hohen Festigkeiten tendenziell niedrigere Bruchdehnungen zuzuordnen sind und umgekehrt:

| | |
|---|---|
| Rm von 700 bis 800 MPa: | Rm x A80 ≥ 15400 bis zu 50000 MPa% |
| Rm von über 800 bis 900 MPa: | Rm x A80 ≥ 14400 bis zu 50000 MPa% |
| Rm von über 900 bis 1100 MPa: | Rm x A80 ≥ 13500 bis zu 45000 MPa% |
| Rm von über 1100 bis 1200 MPa: | Rm x A80 ≥ 13200 bis zu 45000 MPa% |
| Rm von über 1200 bis 1350 MPa: | Rm x A80 ≥ 11200 bis zu 45000 MPa% |
| Rm von über 1350 bis 1800 MPa: | Rm x A80 ≥ 8000 bis zu 45000 MPa% |
| Rm von über 1800 MPa: | Rm x A80 ≥ 7200 bis zu 30000 MPa% |

Für die Bruchdehnungsuntersuchungen wurde gemäß DIN 50 125 die Probenform 2 mit einer Anfangsmesslänge von A80 verwendet.

Die Verwendung des Begriffs "bis" in den Definitionen der Gehaltsbereiche, wie beispielsweise 0,01 bis 1 Gew.-%, bedeutet, dass die Eckwerte - im Beispiel 0,01 und 1 - mit eingeschlossen sind.

Legierungselemente werden dem Stahl in der Regel zugegeben, um gezielt bestimmte Eigenschaften zu beeinflussen. Dabei kann ein Legierungselement in verschiedenen Stählen unterschiedliche Eigenschaften beeinflussen. Die Wirkung und Wechselwirkung hängt im Allgemeinen stark von der Menge, der Anwesenheit weiterer Legierungselemente und dem Lösungszustand im Werkstoff ab. Die Zusammenhänge sind vielseitig und komplex. Im Folgenden soll auf die Wirkung der Legierungselemente in der erfindungsgemäßen Legierung näher eingegangen werden. Nachfolgend werden die positiven Effekte der erfindungsgemäß verwendeten Legierungselemente beschrieben.

Kohlenstoff C: Wird benötigt zur Bildung von Karbiden, stabilisiert den Austenit und erhöht die Festigkeit. Höhere Gehalte an C verschlechtern die Schweißeigenschaften und führen zur Verschlechterung der Dehnungs- und Zähigkeitseigenschaften, weshalb ein maximaler Gehalt von 0,9 Gew.-%, bevorzugt 0,35 Gew.-%, festgelegt wird. Um die gewünschte Kombination von Festigkeits- und Dehnungseigenschaften des Werkstoffs zu erreichen, ist eine Mindestzugabe von 0,0005 Gew.-%, bevorzugt 0,05 Gew.-%, erforderlich.

Mangan Mn: Stabilisiert den Austenit, erhöht die Festigkeit und die Zähigkeit und ermöglicht eine verformungsinduzierte Martensit- und/oder Zwillingsbildung in der erfindungsgemäßen Legierung. Gehalte kleiner 4 Gew.-% sind nicht ausreichend zur Stabilisierung des Austenits und verschlechtern somit die Dehnungseigenschaften, während bei Gehalten von mehr als 10 Gew.-% und mehr der Austenit zu stark stabilisiert wird und dadurch die Festigkeitseigenschaften, insbesondere die 0,2 % Dehngrenze, verringert werden. Für den erfindungsgemäßen Manganstahl mit mittleren Mangangehalten wird ein Bereich von 4 bis kleiner 10 Gew.-%, vorzugsweise größer 5 bis kleiner 10, bevorzugt.

Aluminium AI: Al verbessert die Festigkeits- und Dehnungseigenschaften, senkt die spezifische Dichte und beeinflusst das Umwandlungsverhalten der erfindungsgemäßen Legierung. Zu hohe Gehalte an Al verschlechtern die Dehnungseigenschaften. Auch verschlechtern höhere Al-Gehalte das Gießverhalten im Strangguss deutlich. Hierdurch entsteht ein höherer Aufwand beim Vergießen. Hohe Al-Gehalte verzögern die Ausscheidung von Karbiden in der erfindungsgemäßen Legierung. Daher wird ein Al-Gehalt von 0,02 bis 10 Gew.-%, bevorzugt 0,05 bis 5 Gew.-%, besonders bevorzugt von größer 0,5 bis 3 Gew.-%, festgelegt.

Silizium Si: Die optionale Zugabe von Si in höheren Gehalten behindert die Kohlenstoffdiffusion, verringert die spezifische Dichte und erhöht die Festigkeit und die Dehnungs- sowie Zähigkeitseigenschaften. Des Weiteren konnte eine Verbesserung der Kaltwalzbarkeit durch Zulegieren von Si beobachtet werden. Höhere Si-Gehalte führen zu einer Versprödung des Werkstoffs und beeinflussen die Warm- und Kaltwalzbarkeit sowie die Beschichtbarkeit beispielsweise durch Verzinken negativ. Daher wird ein Si-Gehalt von 0 bis 6 Gew.-%, bevorzugt 0,05 bis 3 Gew.-%, besonders bevorzugt von 0,1 bis 1,5 Gew.-%, festgelegt.

Chrom Cr: Die optionale Zugabe von Cr verbessert die Festigkeit und verringert die Korrosionsrate, verzögert die Ferrit- und Perlitbildung und bildet Karbide. Höhere Gehalte führen zu einer Verschlechterung der Dehnungseigenschaften. Daher wird ein Cr-Gehalt von 0 bis 6 Gew.-%, bevorzugt 0,1 bis 4 Gew.-%, besonders bevorzugt von größer 0,5 bis 2,5 Gew.-%, festgelegt.

Mikrolegierungselemente werden in der Regel nur in sehr geringen Mengen zugegeben. Sie wirken im Gegensatz zu den Legierungselementen hauptsächlich durch Ausscheidungsbildung können aber auch in gelöstem Zustand die Eigenschaften beeinflussen. Bereits geringe Mengenzugaben der Mikrolegierungselemente beeinflussen die Verarbeitungs- und Endeigenschaften erheblich. Insbesondere bei der Warmumformung beeinflussen Mikrolegierungselemente das Rekristallisationsverhalten vorteilhaft und bewirken eine Kornfeinung.

Typische Mikrolegierungselemente sind Vanadium, Niob und Titan. Diese Elemente können im Eisengitter gelöst werden und bilden mit Kohlenstoff und Stickstoff Carbide, Nitride und Carbonitride.

Vanadium V und Niob Nb: Diese wirken insbesondere durch die Bildung von Karbiden kornfeinend, wodurch gleichzeitig die Festigkeit, Zähigkeit und Dehnungseigenschaften verbessert werden. Gehalte von über 1,5 Gew.-% beziehungsweise 1 Gew.-% bringen keine weiteren Vorteile. Für Vanadium und Niob wird optional bevorzugt ein Mindestgehalt von 0,005 Gew.-% und ein Maximalgehalt von 0,6 Gew.-% beziehungsweise 0,4 Gew.-%, besonders bevorzugt ein Mindestgehalt von 0,01 Gew.-% und ein Maximalgehalt von 0,3 Gew.-% beziehungsweise 0,1 Gew.-%, vorgesehen.

Titan Ti: Wirkt als Karbidbildner kornfeinend, wodurch gleichzeitig die Festigkeit, Zähigkeit und Dehnungseigenschaften verbessert werden und vermindert die interkristalline Korrosion. Gehalte an Ti von über 1,5 Gew.-% verschlechtern die Dehnungseigenschaften, weshalb optional ein Maximalgehalt von 1,5 Gew.-%, bevorzugt 0,6 Gew.-%, besonders bevorzugt 0,3 Gew.-%, festgelegt wird. Mindestgehalte von 0,005 Gew.-%, bevorzugt von 0,01 Gew.-%, können vorgesehen werden, um Stickstoff abzubinden und Ti vorteilhaft auszuscheiden.

Molybdän Mo: Wirkt als Karbidbildner, erhöht die Festigkeit und erhöht den Widerstand gegen verzögerte Rissbildung und Wasserstoffversprödung. Hohe Gehalte an Mo verschlechtern die Dehnungseigenschaften. Daher wird optional ein Mo-Gehalt von 0 bis 3 Gew.-%, bevorzugt 0,005 bis 1,5 Gew.-%, besonders bevorzugt von größer 0,01 bis 0,6 Gew.-%, festgelegt.

Zinn Sn: Zinn steigert die Festigkeit, reichert sich jedoch ähnlich Kupfer bei höheren Temperaturen unter der Zunderschicht und an den Korngrenzen an. Es führt durch Eindringen in die Korngrenzen zur Bildung niedrig schmelzender Phasen und damit verbunden zu Rissen im Gefüge und zu Lotbrüchigkeit, weshalb optional ein Maximalgehalt 0,5 Gew.-%, bevorzugt von kleiner 0,2 Gew.-%, besonders bevorzugt von kleiner 0,05 Gew.-%, vorgesehen ist.

Kupfer Cu: Verringert die Korrosionsrate und steigert die Festigkeit. Gehalte oberhalb 3 Gew.-% verschlechtern die Herstellbarkeit durch Bildung niedrig schmelzender Phasen beim Vergießen und Warmwalzen weshalb optional ein Maximalgehalt von 3 Gew.-%, bevorzugt von kleiner 0,5 Gew.-%, besonders bevorzugt von kleiner 0,1 Gew.-%, festgelegt wird.

Wolfram W: Wirkt als Karbidbildner und erhöht die Festigkeit und Warmfestigkeit. Gehalte an W von über 5 Gew.-% verschlechtern die Dehnungseigenschaften, weshalb optional ein Maximalgehalt von 5 Gew.-% festgelegt wird. Bevorzugt ist ein Gehalt von 0,01 Gew.-% bis 3 Gew.-% vorgesehen und besonders bevorzugt von 0,2 bis 1,5 Gew.-%.

Kobalt Co: Erhöht die Festigkeit des Stahls, stabilisiert den Austenit und verbessert die Warmfestigkeit. Gehalte von über 8 Gew.-% verschlechtern die Dehnungseigenschaften. Der Co-Gehalt wird daher mit maximal 8 Gew.-%, bevorzugt von 0,01 bis 5 Gew.-%, besonders bevorzugt von 0,3 bis 2 Gew.-%, festgelegt.

Zirkonium Zr: Wirkt als Karbidbildner und verbessert die Festigkeit. Gehalte an Zr von über 0,5 Gew-% verschlechtern die Dehnungseigenschaften. Daher wird ein Zr-Gehalt von 0 bis 0,5 Gew.-%, bevorzugt 0,005 bis 0,3 Gew.-%, besonders bevorzugt von 0,01 bis 0,2 Gew.-%, festgelegt.

Tantal Ta: Tantal wirkt ähnlich wie Niob als Karbidbildner kornfeinend und verbessert dadurch gleichzeitig die Festigkeit, Zähigkeit und Dehnungseigenschaften. Gehalte von über 0,5 Gew.-% bewirken keine weitere Verbesserung der Eigenschaften. Daher wird optional ein Maximalgehalt von 0,5 Gew.-% festgelegt. Bevorzugt werden ein Minimalgehalt von 0,005 und ein Maximalgehalt von 0,3 Gew.-% festgelegt, in welchem die Kornfeinung vorteilhaft bewirkt werden kann. Zur Verbesserung der Wirtschaftlichkeit und Optimierung der Kornfeinung wird insbesondere bevorzugt ein Gehalt von 0,01 Gew.-% bis 0,1 Gew.-% angestrebt.

Tellur Te: Tellur verbessert die Korrosionsbeständigkeit und die mechanischen Eigenschaften sowie die spanende Bearbeitbarkeit. Des Weiteren erhöht Te die Festigkeit von Mangansulfiden (MnS), welches dadurch beim Warm- und Kaltwalzen weniger stark in Walzrichtung gelängt wird. Gehalte oberhalb 0,5 Gew.-% verschlechtern die Dehnungs- und Zähigkeitseigenschaften, weshalb ein Maximalgehalt von 0,5 Gew.-% festgelegt wird. Optional wird ein Minimalgehalt von 0,005 Gew.-% und ein Maximalgehalt von 0,3 Gew.-% festgelegt, welche die mechanischen Eigenschaften vorteilhaft verbessern und die Festigkeit vorhandener MnS erhöht. Weiterhin wird ein Minimalgehalt von 0,01 Gew.-% und ein Maximalgehalt von 0,1 Gew.-% bevorzugt, welche eine Optimierung der mechanischen Eigenschaften bei gleichzeitiger Reduktion der Legierungskosten ermöglichen.

Bor B: Bor verzögert die Austenitumwandlung, verbessert die Warmumformeigenschaften von Stählen und erhöht die Festigkeit bei Raumtemperatur. Es entfaltet seine Wirkung bereits bei sehr geringen Legierungsgehalten. Gehalte oberhalb 0,15 Gew.-% verschlechtern die Dehnungs- und Zähigkeitseigenschaften stark, weshalb der Maximalgehalt auf 0,15 Gew.-% festgelegt wird. Optional wird ein Minimalgehalt von 0,001 Gew.-% und Maximalgehalt von 0,08, vorzugsweise ein Minimalgehalt von 0,002 Gew.-% und Maximalgehalt von 0,01 festgelegt, um die festigkeitssteigernde Wirkung von Bor vorteilhaft zu nutzen.

Phosphor P: Ist ein Spurenelement, stammt überwiegend aus dem Eisenerz und wird im Eisengitter als Substitutionsatom gelöst. Phosphor steigert durch Mischkristallverfestigung die Härte und verbessert die Härtbarkeit. Es wird allerdings in der Regel angestrebt, den Phosphorgehalt soweit wie möglich abzusenken, da er unter anderem durch seine geringe Diffusionsgeschwindigkeit stark seigerungsanfällig ist und im hohen Maße die Zähigkeit vermindert. Durch die Anlagerung von Phosphor an den Korngrenzen können Risse entlang der Korngrenzen beim Warmwalzen auftreten. Zudem setzt Phosphor die Übergangstemperatur von zähem zu sprödem Verhalten um bis zu 300 60 °C herauf. Aus vorgenannten Gründen ist der Phosphorgehalt auf Werte kleiner 0,1 Gew.-%, bevorzugt kleiner 0,04 Gew.-%, begrenzt.

Schwefel S: Ist wie Phosphor als Spurenelement im Eisenerz aber insbesondere bei der Erzeugungsroute über den Hochofenprozess im Koks gebunden. Er ist im Stahl im Allgemeinen unerwünscht, da er zu starker Seigerung neigt und stark versprödend wirkt, wodurch die Dehnungs- und Zähigkeitseigenschaften verschlechtert werden. Es wird daher versucht, möglichst geringe Mengen an Schwefel in der Schmelze zu erreichen (beispielsweise durch eine Tiefentschwefelung). Aus vorgenannten Gründen ist der Schwefelgehalt auf Werte kleiner 0,1 Gew.-%, bevorzugt kleiner 0,02 Gew.-%, begrenzt.

Stickstoff N: N ist ebenfalls ein Begleitelement aus der Stahlherstellung. Er verbessert im gelösten Zustand bei höher manganhaltigen Stählen mit größer oder gleich 4 Gew.-% Mn die Festigkeits- und Zähigkeitseigenschaften. Niedriger Mn-legierte Stähle mit weniger als 4 Gew.-% neigen in Gegenwart von freiem Stickstoff zu einem starken Alterungseffekt. Der Stickstoff diffundiert schon bei geringen Temperaturen an Versetzungen und blockiert diese. Er bewirkt damit einen Festigkeitsanstieg verbunden mit einem rapiden Zähigkeitsverlust. Ein Abbinden des Stickstoffes in Form von Nitriden ist beispielsweise durch Zulegieren von Titan oder Aluminium möglich, wobei sich insbesondere Aluminiumnitride negativ auf die Umformeigenschaften der erfindungsgemäßen Legierung auswirken. Aus vorgenannten Gründen ist der Stickstoffgehalt auf weniger als 0,1 Gew.-%, bevorzugt kleiner 0,05 Gew.-%, begrenzt.

## Patentansprüche

1. Verfahren zur Herstellung eines Bauteils aus einem mittelmanganhaltigen Stahlflachprodukt mit 4 bis kleiner 10 Gew.-% Mn, vorzugsweise mit größer 5 bis kleiner 10 Gew.-% Mn, mit 0,0005 bis 0,9 Gew.-% C, vorzugsweise 0,05 bis 0,35 Gew.-% C, mit 0,02 bis 10 Gew.-% AI, bevorzugt 0,05 bis 5 Gew.-% AI, insbesondere bevorzugt größer 0,5 bis 3 Gew.-% AI, Rest Eisen einschließlich unvermeidbarer stahlbegleitender Elemente mit optionaler Zulegierung von:
Si: 0 bis 6, bevorzugt 0,05 bis 3, insbesondere bevorzugt 0,1 bis 1,5
Cr: 0 bis 6, bevorzugt 0,1 bis 4, insbesondere bevorzugt größer 0,5 bis 2,5
Nb: 0 bis 1, bevorzugt 0,005 bis 0,4, insbesondere bevorzugt 0,01 bis 0,1
V: 0 bis 1,5, bevorzugt 0,005 bis 0,6, insbesondere bevorzugt 0,01 bis 0,3
Ti: 0 bis 1,5, bevorzugt 0,005 bis 0,6, insbesondere bevorzugt 0,01 bis 0,3
Mo: 0 bis 3, bevorzugt 0,005 bis 1,5, insbesondere bevorzugt 0,01 bis 0,6
Sn: 0 bis 0,5, bevorzugt kleiner 0,2, insbesondere bevorzugt kleiner 0,05
Cu: 0 bis 3, bevorzugt kleiner 0,5, insbesondere bevorzugt kleiner 0,1
W: 0 bis 5, bevorzugt 0,01 bis 3, insbesondere bevorzugt 0,2 bis 1,5
Co: 0 bis 8, bevorzugt 0,01 bis 5, insbesondere bevorzugt 0,3 bis 2
Zr: 0 bis 0,5, bevorzugt 0,005 bis 0,3, insbesondere bevorzugt 0,01 bis 0,2
Ta: 0 bis 0,5, bevorzugt 0,005 bis 0,3, insbesondere bevorzugt 0,01 bis 0,1
Te: 0 bis 0,5, bevorzugt 0,005 bis 0,3, insbesondere bevorzugt 0,01 bis 0,1
B: 0 bis 0,15, bevorzugt 0,001 bis 0,08, insbesondere bevorzugt 0,002 bis 0,01
P: kleiner 0,1, bevorzugt kleiner 0,04
S: kleiner 0,1, bevorzugt kleiner 0,02
N: kleiner 0,1, bevorzugt kleiner 0,05
und mit TRIP-Effekt bei Raumtemperatur, wobei das Stahlflachprodukt mit einem Gefüge hergestellt wird, das einen Austenitanteil von 10 bis 80 %, 20 bis 90 % Martensit, Ferrit und Bainit aufweist, wobei mindestens 30 % des Martensits als angelassener Martensit vorliegt, umfassend die Schritte:
- Vorwärmen des Stahlflachprodukts vor mindestens einem Umformschritt auf eine Temperatur von 60 60 °C bis 450 °C,
- Umformen des Stahlflachprodukts zu einem Bauteil mit mindestens einem Umformschritt bei dieser Temperatur von 60 60 °C bis 450 °C,
- Abkühlen des Bauteils nach dem mindestens einen Umformschritt auf eine Temperatur von kleiner als Raumtemperatur bis -196 60 °C oder Umformen des Bauteils nach dem mindestens einen Umformschritt mit mindestens einem weiteren Umformschritt bei einer Temperatur von kleiner als Raumtemperatur bis -196 °C, wobei das Bauteil eine Dehngrenze Rp0,2 von 300 bis 1350 MPa, eine Zugfestigkeit Rm von 1100 bis 2200 MPa und eine Bruchdehnung A80 von mehr als 4 bis 41% aufweist.

2. Verfahren nach Anspruch 1, **dadurch gekennzeichnet, dass** das Bauteil mit dem mindestens einen weiteren Umformschritt bei einer Temperatur kleiner als 0 60 °C bis - 196 60 °C umgeformt wird.

3. Verfahren nach Anspruch 1 oder 2, **dadurch gekennzeichnet, dass** das Stahlflachprodukt vor dem mindestens einen weiteren Umformschritt auf eine Temperatur von kleiner als Raumtemperatur bis -196 °C, bevorzugt kleiner als 0 60 °C bis -196 °C, abgekühlt wird.

4. Verfahren nach mindestens einem der Ansprüche 1 bis 3, **dadurch gekennzeichnet, dass** der mindestens eine Umformschritt ein oder mehrere abschließende Umformschritte umfasst.

5. Verfahren nach mindestens einem der Ansprüche 1 bis 4, **dadurch gekennzeichnet, dass** das Stahlflachprodukt mit den einzelnen Umformschritten bei unterschiedlichen Temperaturen, die jeweils lokal begrenzt sind, zu einem Bauteil umgeformt wird.

6. Verfahren nach mindestens einem der Ansprüche 1 bis 5, **dadurch gekennzeichnet, dass** das Stahlflachprodukt von einer oder beiden Seiten vorgewärmt und/oder abgekühlt wird.

7. Verfahren nach mindestens einem der Ansprüche 1 bis 6, **dadurch gekennzeichnet, dass** das Stahlflachprodukt beim Umformen zwischen den Umformschritten auf die für die jeweiligen Umformschritte gewählten Temperaturen zwischen -196 60 °C bis unterhalb Ac3 zwischenerwärmt oder zwischengekühlt wird.

8. Verfahren nach mindestens einem der Ansprüche 1 bis 7, **dadurch gekennzeichnet, dass** das Stahlflachprodukt mittels Rollumformen umgeformt wird oder das Stahlflachprodukt zu einem Rohr eingeformt und längs- oder spiralnahtgeschweißt, das Rohr innenhochdruckumgeformt wird und anschließend optional geglüht wird.

9. Verfahren nach einem der Ansprüche 1 bis 8, **dadurch gekennzeichnet, dass** das Stahlflachprodukt mit einem Gefüge hergestellt wird, das 40 bis 80 % Austenit, weniger als 20 % Ferrit/Bainit und Rest Martensit aufweist.

10. Verfahren nach einem der Ansprüche 1 bis 9, **dadurch gekennzeichnet, dass** das Stahlflachprodukt beziehungsweise das Bauteil metallisch, anorganisch oder organisch beschichtet wird.

11. Verwendung eines nach einem Verfahren nach mindestens einem der vorgenannten Ansprüche 1 bis 10 hergestellten Bauteils im Kraftfahrzeugbau, Schienenfahrzeugbau, Schiffsbau, Anlagenbau, Infrastrukturbau, Bergbau, in der Luft- und Raumfahrt, Hausgerätetechnik und in geschweißten Platinen.

## Claims

1. A method for producing a component from a steel flat product containing medium manganese with 4 to less than 10 wt.% Mn, preferably with greater than 5 to less than 10 wt.% Mn, with 0.0005 to 0.9 wt.% C, preferably 0.05 to 0.35 wt.% C, with 0.02 to 10 wt.% Al, preferably 0.05 to 5 wt.% Al, particularly preferably greater than 0.5 to 3 wt.% Al, remainder iron including unavoidable steel-accompanying elements with optional alloying of:
Si: 0 to 6, preferably 0.05 to 3, particularly preferably 0.1 to 1.5
Cr: 0 to 6, preferably 0.1 to 4, particularly preferably greater than 0.5 to 2.5
Nb: 0 to 1, preferably 0.005 to 0.4, particularly preferably 0.01 to 0.1
V: 0 to 1.5, preferably 0.005 to 0.6, particularly preferably 0.01 to 0.3
Ti: 0 to 1.5, preferably 0.005 to 0.6, particularly preferably 0.01 to 0.3
Mo: 0 to 3, preferably 0.005 to 1.5, particularly preferably 0.01 to 0.6
Sn: 0 to 0.5, preferably less than 0.2, particularly preferably less than 0.05
Cu: 0 to 3, preferably less than 0.5, particularly preferably less than 0.1
W: 0 to 5, preferably 0.01 to 3, particularly preferably 0.2 to 1.5
Co: 0 to 8, preferably 0.01 to 5, particularly preferably 0.3 to 2
Zr: 0 to 0.5, preferably 0.005 to 0.3, particularly preferably 0.01 to 0.2
Ta: 0 to 0.5, preferably 0.005 to 0.3, particularly preferably 0.01 to 0.1
Te: 0 to 0.5, preferably 0.005 to 0.3, particularly preferably 0.01 to 0.1
B: 0 to 0.15, preferably 0.001 to 0.08, particularly preferably 0.002 to 0.01
P: less than 0.1, preferably less than 0.04
S: less than 0.1, preferably less than 0.02
N: less than 0.1, preferably less than 0.05
and with TRIP effect at room temperature, wherein the steel flat product is produced with a microstructure having an austenite content of 10 to 80 %, 20 to 90 % martensite, ferrite and bainite, wherein at least 30 % of the martensite is present as tempered martensite, comprising the steps of:
- preheating the flat steel product to a temperature of 60 °C to 450 °C before at least one forming step,
- forming of the flat steel product into a component with at least one forming step at this temperature of 60 °C to 450 °C,
- cooling the component after the at least one forming step to a temperature of less than room temperature to -196 °C or forming the component after the at least one forming step with at least one further forming step at a temperature of less than room temperature to -196 °C, wherein the component has a yield strength Rp0.2 of 300 to 1350 MPa, a tensile strength Rm of 1100 to 2200 MPa and an elongation at break A80 of more than 4 to 41%.

2. The method according to claim 1, **characterized in that** the component is formed with the at least one further forming step at a temperature of less than 0 °C to - 196 °C.

3. The method according to claim 1 or 2, **characterized in that** the flat steel product is cooled to a temperature of less than room temperature to -196 °C, preferably less than 0 °C to -196 °C, before the at least one further forming step.

4. The method according to at least one of claims 1 to 3, **characterized in that** the at least one forming step comprises one or more final forming steps.

5. The method according to at least any of claims 1 to 4, **characterized in that** the flat steel product is formed into a component using the individual forming steps at different temperatures, each of which is locally limited.

6. The method according to at least any of claims 1 to 5, **characterized in that** the flat steel product is preheated and/or cooled from one or both sides.

7. The method according to at least any of claims 1 to 6, **characterized in that** the flat steel product is temporarily heated or temporarily cooled during forming between the forming steps to the temperatures selected for the respective forming steps between -196 °C to below Ac3.

8. The method according to at least any of claims 1 to 7, **characterized in that** the flat steel product is formed by means of roll forming or the flat steel product is formed into a tube and longitudinally or spirally welded, the tube is internally high-pressure formed and subsequently optionally annealed.

9. The method according to any of claims 1 to 8, **characterized in that** the steel flat product is produced with a microstructure having 40 to 80 % austenite, less than 20 % ferrite/bainite and the remainder martensite.

10. The method according to any of claims 1 to 9, **characterized in that** the flat steel product or the component is coated metallically, inorganically or organically.

11. A use of a component produced by a method according to at least any of the preceding claims 1 to 10 in motor vehicle construction, rail vehicle construction, shipbuilding, plant construction, infrastructure construction, mining, aerospace, household appliance technology and in welded metal plates.

## Revendications

1. Procédé de fabrication d'un élément de construction à partir d'un produit plat en acier contenant du manganèse moyen et comprenant de 4 à moins de 10 % en poids de Mn, de préférence de plus de 5 à moins de 10 % en poids de Mn, 0,0005 à 0,9 % en poids de C, de préférence de 0,05 à 0,35 % en poids de C, de 0,02 à 10 % en poids d'AI, de préférence de 0,05 à 5 % en poids d'AI, de manière particulièrement préférée de plus de à 0,5 à 3 % en poids d'AI, le reste étant du fer y compris des éléments inévitables liés à l'acier avec ajout facultatif de :
Si: 0 à 6, de préférence 0,05 à 3, de manière particulièrement préférée 0,1 à 1,5
Cr: 0 à 6, de préférence 0,1 à 4, de manière particulièrement préférée plus de 0,5 à 2,5
Nb: 0 à 1, de préférence 0,005 à 0,4, de manière particulièrement préférée 0,01 à 0,1
V: 0 à 1,5, de préférence 0,005 à 0,6, de manière particulièrement préférée 0,01 à 0,3
Ti: 0 à 1,5, de préférence 0,005 à 0,6, de manière particulièrement préférée 0,01 à 0,3
Mo: 0 à 3, de préférence 0,005 à 1,5, de manière particulièrement préférée 0,01 à 0,6
Sn: 0 à 0,5, de préférence inférieur à 0,2, de manière particulièrement préférée moins de 0,05
Cu: 0 à 3, de préférence inférieur à 0,5, de manière particulièrement préférée moins de 0,1
W: 0 à 5, de préférence 0,01 à 3, de manière particulièrement préférée 0,2 à 1,5
Co: 0 à 8, de préférence 0,01 à 5, de manière particulièrement préférée 0,3 à 2
Zr: 0 à 0,5, de préférence 0,005 à 0,3, de manière particulièrement préférée 0,01 à 0,2
Ta: 0 à 0,5, de préférence 0,005 à 0,3, de manière particulièrement préférée 0,01 à 0,1
Te: 0 à 0,5, de préférence 0,005 à 0,3, de manière particulièrement préférée 0,01 à 0,1
B: 0 à 0,15, de préférence 0,001 à 0,08, de manière particulièrement préférée 0,002 à 0,01
P: moins de 0,1, de préférence moins de 0,04
S: moins de 0,1, de préférence moins de 0,02
N: moins de 0,1, de préférence moins 0,05
et avec effet TRIP à température ambiante, le produit plat en acier étant fabriqué avec une micro structure qui a une teneur en austénite de 10 à 80 %, 20 à 90 % de martensite, de ferrite et de bainite, au moins 30 % de martensite étant présents sous forme de martensite revenue, ledit procédé comprenant les étapes suivantes :
- préchauffer le produit plat en acier avant au moins une étape de mise en forme à une température de 60 °C à 450 °C,
- mettre en forme le produit plat en acier pour obtenir un élément de construction avec au moins une étape de mise en forme à cette température de 60 °C à 450 °C,
- refroidir l'élément de construction après l'au moins une étape de mise en forme à une température inférieure à la température ambiante jusqu'à -196 °C ou mettre en forme l'élément de construction après l'au moins une étape de mise en forme avec au moins une autre étape de mise en forme à une température inférieure à la température ambiante jusqu'à -196°C, l'élément de construction ayant une limite d'élasticité Rp0,2 de 300 à 1350 MPa, une résistance à la traction Rm de 1100 à 2200 MPa et un allongement à la rupture A80 de plus de 4 à 41 %.

2. Procédé selon la revendication 1, **caractérisé en ce que** l'élément de construction est formé avec au moins une étape supplémentaire de mise en forme à une température inférieure à 0°C jusqu'à 196°C.

3. Procédé selon la revendication 1 ou 2, **caractérisé en ce que** le produit plat en acier est refroidi avant au moins une étape de mise en forme supplémentaire à une température inférieure à la température ambiante jusqu'à -196 °C, de préférence inférieure à 0 °C jusqu'à -196 °C.

4. Procédé selon l'une au moins des revendications 1 à 3, **caractérisé en ce que** l'au moins une étape de mise en forme comprend une ou plusieurs étapes de mise en forme finale.

5. Procédé selon l'une au moins des revendications 1 à 4, **caractérisé en ce que** le produit plat en acier est mis en forme pour obtenir un élément de construction avec les différentes étapes de mise en forme à différentes températures, chacune étant localement limitée.

6. Procédé selon l'une au moins des revendications 1 à 5, **caractérisé en ce que** le produit plat en acier est préchauffé et/ou refroidi depuis un côté ou deux côtés.

7. Procédé selon l'une au moins des revendications 1 à 6, **caractérisé en ce que** le produit plat en acier est soumis à un chauffage intermédiaire ou à un refroidissement intermédiaire lors de la mise en forme entre les étapes de mise en forme aux températures sélectionnées pour les étapes de mise en forme respectives entre - 196 °C et moins de Ac3.

8. Procédé selon l'une au moins des revendications 1 à 7, **caractérisé en ce que** le produit plat en acier est mis en forme par mise en forme au rouleau ou le produit plat en acier est mis sous la forme d'un tube et soudé longitudinalement ou en spirale, le tube est mis en forme intérieurement sous haute pression puis éventuellement recuit.

9. Procédé selon l'une des revendications 1 à 8, **caractérisé en ce que** le produit plat en acier est réalisé avec une micro structure qui comprend 40 à 80 % d'austénite, moins de 20 % de ferrite/bainite et le reste étant de la martensite.

10. Procédé selon l'une des revendications 1 à 9, **caractérisé en ce que** le produit plat en acier ou l'élément de construction est pourvu d'un revêtement métallique, minéral ou organique.

11. Utilisation d'un élément de construction, fabriqué par un procédé selon l'une au moins des revendications précédentes 1 à 10 dans la construction automobile, la construction de véhicules ferroviaires, la construction navale, la construction d'installations, la construction d'infrastructures, l'exploitation minière, l'aérospatiale, l'électroménager et des tôles métalliques soudées.
